(19) Europäisches Patentamt
European Patent Office
Office européen des brevets

(11) EP 3 336 123 A1

(12) EUROPEAN PATENT APPLICATION

(43) Date of publication:
**20.06.2018 Bulletin 2018/25**

(51) Int Cl.:
***C08G 59/42*** *(2006.01)*

(21) Application number: **16306675.6**

(22) Date of filing: **13.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **SABIC Global Technologies B.V.**
**4612 PX Bergen op Zoom (NL)**

(72) Inventors:
- **GOOSSENS, Johannes Gerardus Petrus**
**5473 HEESWIJK-DINTHER (NL)**
- **DEMONGEOT, Adrian**
**75005 PARIS (FR)**
- **TOURNILHAC, François**
**75005 PARIS (FR)**
- **LEIBLER, Ludwik**
**75005 PARIS (FR)**

(74) Representative: **Balder IP Law, S.L.**
**Paseo de la Castellana 93**
**5a planta**
**28046 Madrid (ES)**

# (54) TUNING NETWORK FORMATION OF DYNAMICALLY CROSS-LINKED NETWORKS BASED ON SELECTION OF CROSSLINKER AND CATALYST

(57) Methods of forming pre-dynamically cross-linked polymer compositions by combining poly(butylene terephthalate) and a polyepoxy- coupler component in the presence of a transesterification catalyst are described.

EP 3 336 123 A1

## Description

### BACKGROUND

"Dynamic cross-linked polymer compositions" (or DCNs) represent a versatile class of polymers. The compositions feature a system of covalently cross-linked polymer networks and can be characterized by the nature of their structure. At elevated temperatures, the cross-links undergo transesterification reactions at such a rate that a flow-like behavior can be observed. Here, the polymer can be processed much like a viscoelastic thermoplastic. At lower temperatures, these dynamic cross-linked polymer compositions behave more like classical thermosets. As the rate of inter-chain transesterification slows down, the network becomes more rigid. The dynamic nature of their cross-links allows these polymers to be heated, reheated, and reformed, as the polymers maintain structural integrity under demanding conditions. Existing DCN composition systems typically include semi-crystalline base resins, such as poly(butylene terephthalate). Semi-crystalline materials however are intrinsically brittle and exhibit poor resistance to failure against impact.

A variety of materials have been evaluated for used in DCNs, including poly(alkylene terephthalates); the comparatively high crystallization rate of poly(alkylene terephthalates) makes them especially suitable for injection molding and other applications, but these materials may in some cases have inferior dimensional stability, thermal resistance, mechanical resistance, and environmental resistance as compared to cross-linked thermosets. Although including poly(alkylene terephthalates) in DCN systems may improve upon these inferior properties, there remains a need in the art to achieve control over the properties of DCN systems.

### SUMMARY

The above-described and other deficiencies of the art are met by the methods of the disclosure. In one aspect, the present disclosure provides methods of forming a pre-dynamic cross-linked polymer composition, comprising: combining poly(butylene terephthalate), poly(ethylene terephthalate), or both with one or more of the following polyepoxy-coupler components: (a) diglycidyl terephthalate, (b) diglycidyl phthalate, (c) resorcinol diglycidyl ether, (d) bisphenol A diglycidyl ether, (e) tetrabromobisphenol A diglycidyl ether, (f) bisphenol F diglycidyl ether or (g) 3,4-epoxycyclohexylmethyl-3',4'-epoxycyclohexane carboxylate, or (h) tetraglycidyl methylene dianiline, the combining being performed in the presence of one or more of the following transesterification catalysts: (a) 2-methylimidazole, (b) 1,5,7-Triazabicyclo[4.4.0]dec-5-ene (TBD), (c) zinc acetate hydrate, (d) zinc lactate, (e) titanium(IV) butoxide, (f) titanium(IV) isopropoxide, or (g) $Ti(PPD)_2$, and the combining being performed so as to form a pre-dynamically-crosslinked composition.

### BRIEF DESCRIPTION OF THE DRAWINGS

The following is a brief description of the drawings wherein like elements are numbered alike and which are exemplary of the various embodiments described herein.

FIG. 1 depicts the storage (solid line) and loss (dashed line) modulus of the oscillatory time sweep measurement curves for a cross-linked polymer network.
FIG. 2 depicts the normalized modulus ($G/G_0$) for the dynamically cross-linked polymer network (solid line), as well as a line representing the absence of stress relaxation in a conventionally cross-linked polymer network (dashed line, fictive data).
FIG. 3 depicts storage modulus as a function of temperature according to a dynamic mechanical analysis (DMA) for several exemplary compositions.
FIG. 4 provides a qualitative illustration of viscosity versus time for formation of a DCN system.
FIG. 5 depicts axial force as a function of extrusion time for formation of a pre-dynamic and /or dynamic cross-linked polymer composition for a variety of catalyst selections.
FIG. 6 depicts axial force for a variety of epoxy couplers for formation of a pre-dynamic and /or dynamic cross-linked polymer composition as a function of time.
FIG. 7 depicts axial force as a function of time for diglycidyl ether and diglycidyl ester for formation of a pre-dynamic and /or dynamic cross-linked polymer composition with varying catalysts.
FIG. 8 depicts axial force as a function of time for pre-DCN formation using PBT and Lotader™ combinations with varying catalysts.

### DETAILED DESCRIPTION OF ILLUSTRATIVE EMBODIMENTS

The present disclosure may be understood more readily by reference to the following detailed description of

desired embodiments and the examples included herein. In the following specifications and the claims that follow, reference will be made to a number of terms which have the following meanings.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present disclosure. All publications, patent applications, patents and other references mentioned herein are incorporated by reference in their entirety. The materials, methods, and examples disclosed herein are illustrative only and not intended to be limiting.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of" and "consisting essentially of" the enumerated ingredients/steps, which allows the presence of only the named ingredients/steps, along with any impurities that might result therefrom, and excludes other ingredients/steps.

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

The polymer compositions prepared according to the described methods can be "dynamic cross-linked polymer compositions." "Dynamic cross-linked polymer compositions" have dynamically, covalently cross-linked polymer networks. At low temperatures, dynamic cross-linked polymer compositions behave like classic thermosets, but at elevated temperatures, it is believed that the cross-links undergo transesterification reactions. At those elevated temperatures, the transesterification happens at such a rate that flow-like behavior is observed and the material can be processed. Hence, the polymer can be processed much like a viscoelastic thermoplastic. At lower temperatures, these dynamic cross-linked polymer compositions behave more like classical thermosets. As the rate of inter-chain transesterification slows down, the network becomes more rigid. The dynamic nature of their cross-links allows these polymers to be heated, reheated, and reformed, as the polymers maintain structural integrity under demanding conditions.

A pre-dynamic cross-linked polymer composition may be cured to arrive at the final state of being a dynamic cross-linked polymer composition; and a pre-dynamic cross-linked composition when subjected to a curing process may (a) exhibit a plateau modulus of from about 0.01 MPa to about 1000 MPa when measured by dynamic mechanical analysis at a temperature above a melting temperature of the polyester of the pre-dynamic cross-linked composition and (b) exhibit a capability of relaxing internal residual stresses at a characteristic timescale of between 0.1 and 100,000 seconds above a glass transition temperature of the polyester, as measured by stress relaxation rheology measurement.

As used herein, "pre-dynamic cross-linked polymer composition" refers to a mixture comprising all the required elements to form a dynamic cross-linked polymer composition, but which has not been cured sufficiently to establish the requisite level of cross-linking for forming a dynamic cross-linked polymer composition. Upon sufficient curing, for example, heating to temperatures up to about 320 °C, a pre-dynamic cross-linked polymer composition may convert to a dynamic cross-linked polymer composition. In some embodiments, curing may comprise heating the composition to a temperature above the glass transition temperature of the polyester component, when applicable. Curing may also be effected, when applicable, at a temperature between the glass transition temperature and melting temperature of the polyester component.

As an example, sufficient curing may occur, for example, by heating the composition to a temperature between 150 °C and 270 °C to convert the pre-dynamic cross-linked polymer composition to a dynamic cross-linked polymer composition. Pre-dynamic cross-linked polymer compositions may comprise a coupler component and a chain (in some embodiments, the chain comprising a polyester) component. A coupler component may comprise at least two reactive groups, e.g., two, three, four, or even more reactive groups. Suitable reactive groups include, e.g., epoxy/epoxide groups, anhydride groups, glycerol and/or glycerol derivative groups, and the like. A coupler component may act to cross-link polymer chains, e.g., to cross-link polyester chains. A coupler component may also act as a chain extender. In certain embodiments, at least some residual reactive groups (e.g., unreacted epoxy groups) of the coupler component remain in the pre-dynamic cross-linked polymer composition. In further embodiments, all reactive groups may be consumed in the formation of the pre-dynamic cross-linked polymer composition. As a specific example, the coupler component may comprise a polyepoxy.

A pre-dynamic cross-linked composition may in some embodiments comprise a polymer component wherein the pre-dynamic polymer composition comprises polyester component chains linked by a coupler component. The pre-dynamic cross-linked composition may be formed in the presence of a suitable catalyst. The pre-dynamic cross-linked may also comprise optional additives. In a specific example, the pre-dynamic cross-linked polymer compositions described herein may comprise a coupler component and a polyester component reacted in the presence of one or more catalysts. The pre-dynamic composition may also comprise one or more additional additives, e.g., fillers such as glass fiber (or other fibers) or talc.

As used herein, "dynamic cross-linked polymer composition" refers to a class of polymer systems that include dynamically, covalently cross-linked polymer networks. At low temperatures, dynamic cross-linked polymer compositions behave like classical thermosets, but at higher temperatures, for example, temperatures up to about 320 °C, it is theorized that the cross-links have dynamic mobility, resulting in a flow-like behavior that enables the composition to be processed and re-processed. Dynamic cross-linked polymer compositions incorporate covalently cross-linked networks that are able to change their topology through thermos-activated bond exchange reactions. The network is capable of reorganizing itself without altering the number of cross-links between its chains of chain segments. At high temperatures, dynamic cross-linked polymer compositions achieve transesterification rates that permit mobility between cross-links, so that the network behaves like a flexible rubber. At low temperatures, exchange reactions are very slow and dynamic cross-linked polymer compositions behave like classical thermosets. Put another way, dynamic cross-linked polymer compositions can be heated to temperatures such that they become liquid without suffering destruction or degradation of their structure.

The viscosity of these materials varies slowly over a broad temperature range, with behavior that approaches the Arrhenius law. Because of the presence of the cross-links, a dynamic cross-linked polymer composition will not lose integrity above the $T_g$ or $T_m$ like a thermoplastic resin will. The cross-links are capable of rearranging themselves via bond exchange reactions between multiple cross-links and/or chain segments as described, for example, by Kloxin and Bowman, Chem. Soc. Rev. 2013, 42, 7161-7173. The continuous rearrangement reactions may occur at room or elevated temperatures depending upon the dynamic covalent chemistry applicable to the system. The respective degree of cross-linking may depend on temperature and stoichiometry. Dynamic cross-linked polymer compositions of the invention can have a $T_g$ of, e.g., about 35 °C to about 65 °C, in some embodiments. An article made from a dynamic cross-linked polymer composition can be heated and deformed, and upon returning to the original temperature, maintains the deformed shape. As such, articles in accordance with the present disclosure may comprise a shape generated by applying mechanical forces to a molded piece formed from the dynamic cross-linked polymer composition. This combination of properties permits the manufacture of shapes that are difficult or impossible to obtain by molding or for which making a mold would not be economical. Dynamic cross-linked polymer compositions generally have good mechanical strength at low temperatures, high chemical resistance, and low coefficient of thermal expansion, along with processability at high temperatures. Examples of dynamic cross-linked polymer compositions are described herein, as well as in U.S. Patent Application No. 2011/0319524, WO 2012/152859; WO 2014/086974; D. Montarnal et al., Science 334 (2011) 965-968; and J.P. Brutman et al, ACS Macro Lett. 2014, 3, 607-610. As an example, articles may be formed from the dynamic cross-linked polymer compositions of the present disclosure and may include composites, a thermoformed material, or a combination thereof.

Examining the nature of a given polymer composition can distinguish whether the composition is cross-linked, reversibly cross-linked, or non-crosslinked, and distinguish whether the composition is conventionally cross-linked or dynamically cross-linked. Dynamically cross-linked networks feature bond exchange reactions proceeding through an associative mechanism, while reversible cross-linked networks feature a dissociative mechanism. That is, the dynamically cross-linked composition remains cross-linked at all times, provided the chemical equilibrium allowing cross-linking is maintained. A reversibly cross-linked network however shows network dissociation upon heating, reversibly transforming to a low-viscous liquid and then reforming the cross-linked network upon cooling. Reversibly cross-linked compositions also tend to dissociate in solvents, particularly polar solvents, while dynamically cross-linked compositions tend to swell in solvents as do conventionally cross-linked compositions.

The cross-linked network apparent in dynamic and other conventionally cross-linked systems may also be

identified by rheological testing. An oscillatory time sweep (OTS) measurement at fixed strain and temperature may be used to confirm network formation. Exemplary OTS curves are presented in FIG. 1 for a cross-linked polymer network. A curve may indicate whether or not the polymer has a cross-linked network. Initially, the loss modulus (viscous component) has a greater value than the storage modulus (elastic component) indicating that the material behaves like a viscous liquid. Polymer network formation is evidenced by the intersection of the loss and storage modulus curves. The intersection, referred to as the "gel point," represents when the elastic component predominates the viscous component and the polymer begins to behave like an elastic solid.

In distinguishing between dynamic cross-linking and conventional (or non-reversible) cross-linking, a stress relaxation measurement may also, or alternatively, be performed at constant strain and temperature. After network formation, the polymer may be heated and a certain strain is imposed on the polymer. After removing the strain, the resulting evolution of the elastic modulus as a function of time reveals whether the polymer is dynamically or conventionally cross-linked. Exemplary curves for dynamically and conventionally cross-linked polymer networks are presented in FIG. 2.

Stress relaxation generally follows a multimodal behavior:

$$G/G_0 = \sum_{i=1}^{n} C_i \exp\left(-t/\tau_i\right),$$

where the number (n), relative contribution ($C_i$) and characteristic timescales ($\tau_i$) of the different relaxation modes are governed by bond exchange chemistry, network topology and network density. For a conventional cross-linked networks, relaxation times approach infinity, $\tau \to \infty$, and $G/G_0 = 1$ (horizontal dashed line). Apparent in the curves for the normalized modulus ($G/G_0$) as a function of time, a conventionally cross-linked network does not exhibit any stress relaxation because the permanent character of the cross-links prevents the polymer chain segments from moving with respect to one another. A dynamically cross-linked network, however, features bond exchange reactions allowing for individual movement of polymer chain segments thereby allowing for complete stress relaxation over time.

If the networks are DCNs, they should be able to relax any residual stress that is imposed on the material as a result of network rearrangement at higher temperature. The relaxation of residual stresses with time (t) can be described with single-exponential decay function, having only one characteristic relaxation time $\tau^*$ :

$$G(t) = G(0) \times \exp\left(-\frac{t}{\tau^*}\right)$$

A characteristic relaxation time can be defined as the time needed to attain particular G(t)/G(0) at a given temperature. At lower temperature, the stress relaxes slower, while at elevated temperatures network rearrangement becomes more active and hence the stress relaxes faster, proving the dynamic nature of the network. The influence of temperature on the stress relaxation modulus clearly demonstrates the ability of the cross-linked network to relieve stress or flow as a function of temperature. It should be understood, however, that the foregoing is illustrative only, as some DCN systems may be characterized as having relaxation behaviors that differ from the foregoing. As one example, a DCN may be characterized as having two or even more characteristic relaxation times.

As shown in FIG. 2, the starting point for stress relaxation measurements, to may be selected to be 0.1 seconds, because the experimental set-up typically does not allow for reliable measurements at timescales shorter than 0.1 seconds. This may be attributed to inertial effects, "setting" of a sample between rheometer plates. Ideally, the normalized modulus follows a (multi-) exponential decay over time:

$$\text{Normalized modulus} = \Sigma c_i \times \exp(-t/\tau_i^*) \approx \exp(-t/\tau_i^*), \text{ if } \tau_2^*, \tau_3^*, \ldots, \tau_n^* >> \tau_1^*$$

Additionally, the influence of temperature on the stress relaxation rate in correspondence with transesterification rate were investigated by fitting the characteristic relaxation time, $\tau^*$ to an Arrhenius type equation.

$$\ln \tau^* = -E_a/RT + \ln A$$

where $E_a$ is the activation energy for the transesterification reaction.

Generally, a dynamic mechanical analysis (DMA) of storage modulus as a function of temperature may exhibit particular characteristics. A dynamically cross-linked polymer composition may exhibit a plateau modulus of from about 0.01 MPa to about 1000 MPa, at a temperature above the melting temperature (and, depending on the polymer, above the glass transition temperature) of the polyester component. Non-limiting FIG. 3 provides a set of exemplary, qualitative curves. Two of the three curves (curves B and C) exhibit a plateau modulus above a certain temperature, thus depicting a dynamically cross-linked network. One of the three curves (curve A), instead of showing a plateau modulus above a certain temperature, exhibits an abrupt decline in modulus at the elevated temperature. Thus, curve A provides a qualitative depiction of a non-dynamically cross-linked polymer composition. It should be understood that exemplary curve A represents a PBT sample; for a highly physically-entangled network, one may observe a plateau that starts to drop at higher temperatures depending on molecular weight and other system charactreristics.

A pre-dynamic cross-linked composition, formed according to the present disclosure described herein, when subjected to a curing process may exhibit a plateau modulus of from about 0.01 MPa to about 1000 MPa, at a temperature above the melting temperature (and, depending on the polymer, above the glass transition temperature) of the polyester component as measured by dynamic mechanical analysis. The cured pre-dynamic cross-linked polymer composition may further exhibit the capability of relaxing internal residual stresses at a characteristic timescale of between 0.1 and 100,000 seconds above the glass transition temperature of the polyester component, as measured by a stress relaxation rheology measurement. It should be understood that in the case of some polymers, (including some semi-crystalline polymers, e.g., PBT) the cured pre-dynamic cross-linked polymer composition may further exhibit the capability of relaxing internal residual stresses at a characteristic timescale of between 0.1 and 100,000 seconds above the $T_m$ for that polymer.

Described herein are methods of preparing dynamic cross-linked polymer compositions. In one embodiment, a coupler a chain component comprising a polyester, and an appropriate catalyst may be reacted via a process such as a reactive extrusion. The reaction may be performed under such conditions so as to form a pre-dynamic cross-linked composition. The reaction may also be performed in the presence of at least one catalyst that promotes the formation of the pre-dynamic cross-linked composition. According to these methods, a coupler component, a polyester component, and a catalyst may be reacted or combined at temperature of up to about 320 °C for about 15 minutes or fewer.

The formation of cross-links of the dynamically cross-linked network compositions disclosed herein may proceed as in FIG. 4. As the reaction of at least the polyester component and coupler component in the presence of a suitable catalyst proceeds, cross-linking density and viscosity increase with time. As shown, the material product may proceed through certain phases of delineated as "time before cross-linking," "time to form cross-links," and post-crosslinking, where formation of cross-links may be referred the gel point, or gelation. As explained herein, the formation of a DCN may be influenced by a variety of factors, including reaction conditions and reagent properties. With respect to reaction conditions, equipment and instrumentation parameters such as blending or mixing speed and temperature may affect the resultant dynamically cross-linked composition. In further aspects, properties and characteristics of the starting materials may further affect the resultant dynamically cross-linked composition.

The change in the nature of cross-linking or the cross-link density may translate to changes in the viscosity of the dynamic crosslinked polymer composition. Typically, at the beginning of the reaction, the viscosity of the forming composition may be relatively low. As cross-links form, viscosity may suddenly increase to eventually reach a maximum also shown in FIG. 4. Viscosity may be assessed in a variety of ways known to those in the art. As one example, one may monitor the axial force exercised on the barrel of an extruder used during the combining of the composition components to qualitatively follow the change of viscosity over a period of time. Reactive extrusion or reactive compounding may be used to form the dynamically cross-linked composition.

Conditions of formation may affect the cross-linking nature of the dynamically cross-linked network polymer composition. The product may be injection molded to form an article, but the presence of cross-links requires more pressure to penetrate the mold as viscosity of the material increases over the viscosity of the starting grade polyester. By reducing the extrusion time and performing a post-curing on the injected part before unmolding, viscosity can be decreased during injection to ensure a better dimensional stability at high temperature.

Speed of combining may also affect the cross-linking nature of the (pre-) dynamic cross-linked composition. The rotation or mixing speed during reactive extrusion may be altered to change viscosity. The time to form the cross-link network may decrease when an elevated mixing speed is used. An increase in the shear rate accelerates the diffusion of the coupler component (i.e., epoxy or polyepoxy) into the polyester melt. This acceleration may also be attributed to the self-heating of the composition when a high shear stress is applied as it is when the speed of combining is increased.

The processing temperature may further affect cross-linking of the dynamic (or pre-dynamic) cross-linked polymer composition. In addition to shear rate, processing temperature may have a complex effect on network formation rate. At the beginning of extrusion, the viscosity is higher at lower temperatures. The trend, however, is reversed as time progresses because of accelerated network formation at higher temperatures.

Moisture content of the processing system may further affect cross-linking. Humidity in the reaction process may result in chain cleavage by hydrolysis. This cleavage may result in the loss of molecular weight and ultimately of mechanical properties of the composition. In various aspects, proper drying of the polyester component (PBT) may be

useful prior to melt processing and a moisture content of less than about 0.05% is desirable. It has been found that the maximum of axial force may be smaller and may be achieved at a longer time for a non-dried PBT. A moisture containing PBT may result in the composition taking longer to reach the gel point because the molecular weight of the PBT has been affected. Humidity of the polyester resin may alter the ratio of functional groups of the coupler component (i.e., epoxy groups) to the cross-linking functional groups of the polyester component (i.e., hydroxyl groups and carboxylic acid groups). The ratio may be defined as:

$$[\text{epoxy}]_{\text{coupler}} / [\text{OH} + \text{COOH}]_{\text{polyester}}$$

Humidity in the polyester resin distorts the molecular weight of the polyester component so that the actual molecular weight of non-dried polyester component (or PBT) is less than its nominal value. As a result, the epoxy/endgroup stoichiometry is affected. Non-dried polyester resin may be used for the synthesis of the DCN composition, but the effect of hydrolysis must be taken into consideration.

**Polyester Chain Component**

The disclosed compositions suitably include polymers that have ester linkages, i.e., polyesters. The polymer can be a polyester that includes ester linkages between monomers. The polymer can also be a copolyester, which is a copolymer comprising ester and other linkages.

As used herein, a "polyester component" is a polymer that has ester linkages, i.e., polyesters. The polymer can be a polyester, which contains only ester linkages between monomers. The polymer can also be a copolyester, which is a copolymer-containing ester linkages and potentially other linkages as well.

The polymer having ester linkages can be a poly(alkylene terephthalate), for example, poly(butylene terephthalate), also known as PBT, which has the structure shown below:

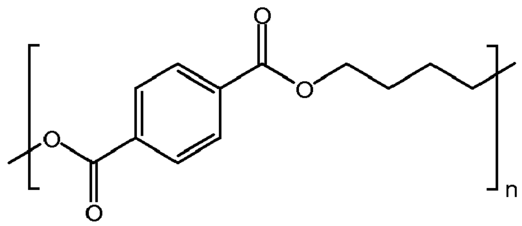

where n is the degree of polymerization, and can be as high as 1,000, and the polymer may have a weight average molecular weight of up to 100,000.

The polymer having ester linkages can be poly(ethylene terephthalate), also known as PET, which has the structure shown below:

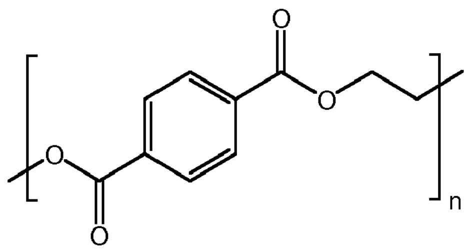

where n is the degree of polymerization, and can be as high as 1,000, and the polymer may have a weight average molecular weight of up to 100,000.

The polymer having ester linkages can be PCTG, which refers to poly(cyclohexylenedimethylene terephthalate), glycol-modified. This is a copolymer formed from 1,4-cyclohexanedimethanol (CHDM), ethylene glycol, and terephthalic acid. The two diols react with the diacid to form a copolyester. The resulting copolyester has the structure shown below:

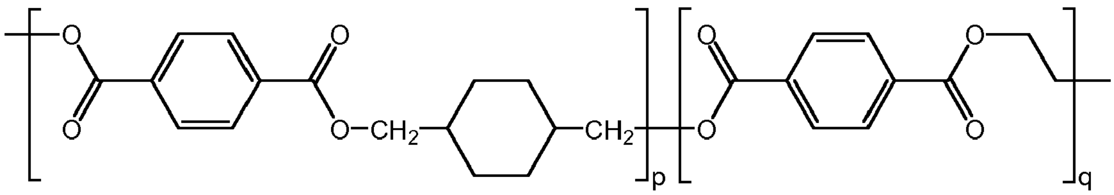

where p is the molar percentage of repeating units derived from CHDM, q is the molar percentage of repeating units derived from ethylene glycol, and p>q, and the polymer may have a weight average molecular weight of up to 100,000.

The polymer having ester linkages can also be PETG. PETG has the same structure as PCTG, except that the ethylene glycol is 50 mol% or more of the diol content. PETG is an abbreviation for poly(ethylene terephthalate), glycol-modified.

The polymer having ester linkages can be poly(1,4-cyclohexane-dimethanol-1,4-cyclohexanedicarboxylate), i.e. PCCD, which is a polyester formed from the reaction of CHDM with dimethyl cyclohexane-1,4-dicarboxylate. PCCD has the structure shown below:

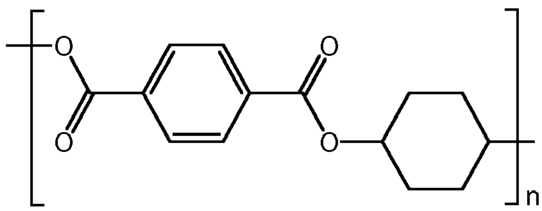

where n is the degree of polymerization, and can be as high as 1,000, and the polymer may have a weight average molecular weight of up to 100,000.

The polymer having ester linkages can be poly(ethylene naphthalate), also known as PEN, which has the structure shown below:

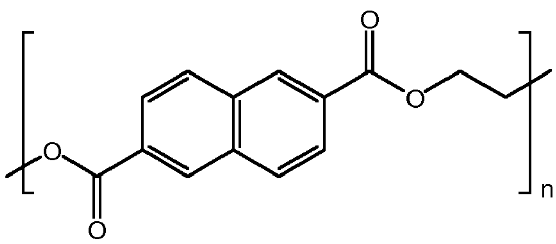

where n is the degree of polymerization, and can be as high as 1,000, and the polymer may have a weight average molecular weight of up to 100,000.

The polymer having ester linkages can also be a copolyestercarbonate. A copolyestercarbonate contains two sets of repeating units, one having carbonate linkages and the other having ester linkages. This is illustrated in the structure below:

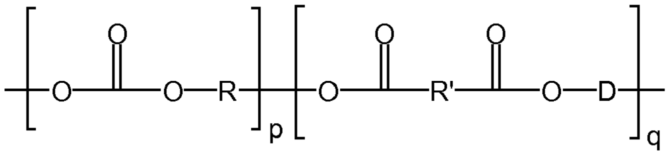

where p is the molar percentage of repeating units having carbonate linkages, q is the molar percentage of repeating units having ester linkages, and p+q=100%; and R, R', and D are independently divalent radicals.

The divalent radicals R, R' and D can be made from any combination of aliphatic or aromatic radicals, and can also contain other heteroatoms, such as for example oxygen, sulfur, or halogen. R and D are generally derived from dihydroxy compounds, such as bisphenols. In particular embodiments, R is derived from bisphenol-A. R' is generally derived from a dicarboxylic acid. Exemplary dicarboxylic acids include isophthalic acid; terephthalic acid; 1,2-di(p-carboxyphenyl)ethane; 4,4'-dicarboxydiphenyl ether; 4,4'-bisbenzoic acid; 1,4-, 1,5-, or 2,6-naphthalenedicarboxylic acids;

and cyclohexane dicarboxylic acid. As additional examples, the repeating unit having ester linkages could be butylene terephthalate, ethylene terephthalate, PCCD, or ethylene naphthalate as depicted above.

Aliphatic polyesters can also be used in the disclosure. Examples of aliphatic polyesters include polyesters having repeating units of the following formula:

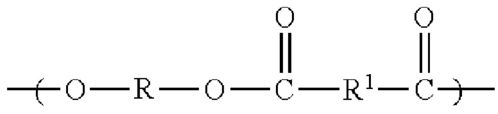

where at least one R or $R^1$ is an alkyl-containing radical. They are prepared from the polycondensation of glycol and aliphatic dicarboxylic acids.

Certain processing conditions and reagent attributes may affect the cross-linking nature of the disclosed dynamic (and pre-dynamic) cross-linked polymer compositions. In one aspect, the molecular weight of the polyester component may affect cross-linking. For example, different cross-linking densities have been observed for compositions formed from PBT resins having different molecular weights with the same catalyst amount and the same ratio of epoxy groups (of the coupler component) to the combined hydroxyl and carboxylic acid end groups of the polyester (PBT) component.

At the same epoxy-to-end group ratio, the lowest molecular weight PBT may take longer to reach the gel point (cross-linked) than the higher molecular weight samples. Thus, the lowest molecular weight composition at the beginning of the cross-linking exchange by transesterification may form smaller ramified PBT which may lead to a longer time. Accordingly, the initial molecular weight of the polyester component may be used to prepare the DCN and can be used to modify the time to form cross-links. The molecular weight as well as the humidity of the polyester component may affect the cross-linking.

## Coupler Component

The compositions of the present disclosure suitably include a coupler component. In various embodiments, the coupler component may function as chain extender or a cross-linking agent. A coupler component may comprise at two epoxy groups (i.e., be a polyepoxy), which epoxy groups may be reacted or unreacted. In an embodiment, the coupler component can be functional, that is, the component may exhibit reactivity with one or more groups of a given chemical structure. As an example, the coupler component described herein may be characterized by one of two reactivities with groups present within the ester oligomer component, i.e., a polyester-comprising chain component. The coupler component may react with 1) a carboxylic acid end group moiety of the chain component or 2) an alcohol end group moiety of the chain component. As described elsewhere herein, a coupler component suitably includes at least two reactive groups; exemplary such reactive groups include epoxy, anhydride, and glycerol/glycerol derivatives. Although many of the non-limiting examples provided herein present epoxy-including coupler components, it should be understood that these examples do not limit the scope of coupler components to coupler components that include only epoxy groups.

A coupler component may be a monomer, an oligomer, or a polymer. In an aspect, the coupler component may be multi-functional, that is having at least two epoxy groups. as an example, the coupler component may be a polyepoxy. Generally, the epoxy-containing component has at least two epoxy groups, and can also include other functional groups as desired, for example, hydroxyl (-OH). Glycidyl epoxy resins may include a particularly preferred epoxy-containing component. In further aspects, the epoxy-containing component may have three, four, five, or more epoxy groups.

One exemplary glycidyl epoxy ether is bisphenol A diglycidyl ether (BADGE), which can be considered a monomer, oligomer or a polymer, and is shown below as Formula (A):

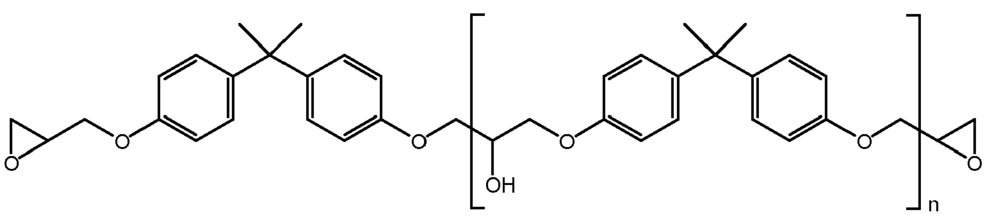

**Formula A**

The value of n may be from 0 to 25 in Formula (A). When n=0, this is a monomer. When n=1 to 7, this is an oligomer. When n=8 to 25, this is a polymer. BADGE-based resins have excellent electrical properties, low shrinkage, good adhesion to numerous metals, good moisture resistance, good heat resistance and good resistance to mechanical impacts. BADGE oligomers (where n=1 or 2) are commercially available as D.E.R ™ 671 from Dow. Novolac resins can be used as coupler component as well. Epoxy resins are illustrated as Formula (B):

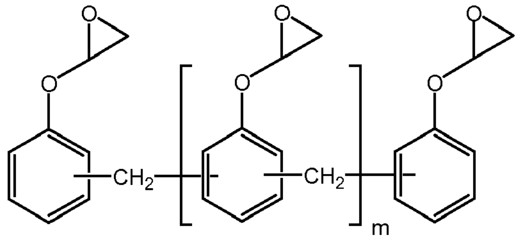

**Formula B**

wherein m is a value from 0 to 25.

Another useful coupler component comprising at least two epoxy groups is depicted in Formula C, a cycloaliphatic epoxy (ERL).

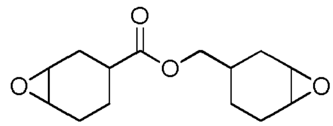

**Formula C**

For a monomeric bisphenol-A epoxy, the value of n is 0 in Formula (A). When n=0, this is a monomer. BADGE-based resins have excellent electrical properties, low shrinkage, good adhesion to numerous metals, good moisture resistance, good heat resistance and good resistance to mechanical impacts. In some embodiments of the present disclosure, the BADGE has a molecular weight of about 1000 Daltons and an epoxy equivalent of about 530 g per equivalent. As used herein, the epoxy equivalent is an expression of the epoxide content of a given compound. The epoxy equivalent is the number of epoxide equivalents in 1 g of resin (eq./g).

Exemplary coupler components of the present disclosure may include monomeric epoxy compounds which generate a primary alcohol. In the presence of a suitable catalyst, the generated primary alcohol can readily undergo transesterification. As an example, and not to be limiting, exemplary coupler components that generate a primary alcohol include certain cyclic epoxies. Exemplary cyclic epoxies that generate a primary alcohol in the presence of a suitable catalyst have a structure according to Formula D.

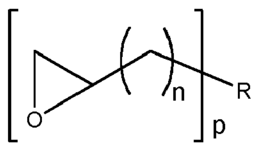

**Formula D**

where n is greater than or equal to 1 and R can be any chemical group (including, but not limited to, ether, ester, phenyl, alkyl, alkynyl, etc.). In preferred embodiments of the present disclosure, p is greater than or equal to 2 such that there are at least 2 of the epoxy structural groups present in the chain extender molecular. BADGE is an exemplary epoxy chain extender where R is bisphenol A, n is 1, and p is 2.

Other exemplary monomeric epoxy compounds include diglycidyl benzenedicarboxylate (Formula E) and triglycidyl benzene tricarboxylate (Formula F).

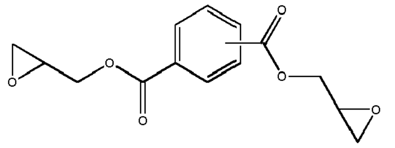

**Formula E**

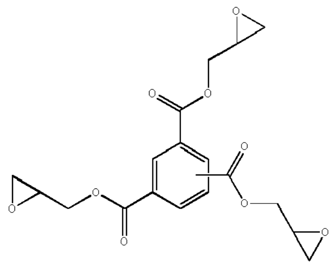

**Formula F**

As noted herein, the coupler component is suitably reactive with the alcohol moiety present in the polyester chain component. Such linker components may include a dianhydride compound, such as a monomeric dianhydride compound. The dianhydride compound may facilitate network formation by undergoing direct esterification with the polyester component. The dianhydride can undergo ring opening, thereby generating carboxylic acid groups. (A catalyst may be used for such ring-opening, but a catalyst is not necessarily required.) The generated carboxylic acid groups undergo direct esterification with the alcohol groups of the polyester component.

An exemplary class of a monomeric linker component that is reactive with the alcohol moiety present in the ester oligomer includes dianhydrides. A preferred dianhydride is a pyromellitic dianhydride as provided in Formula G.

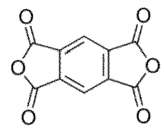

**Formula G**

As explained herein, the coupler component may comprise a polymeric composition. For example, the coupler component may comprise a component exhibiting reactivity with the carboxylic groups of the polyester component. These coupler components may include chain extenders having high epoxy functionality. High epoxy functionality can be characterized by the presence of between 200 and 300 equivalent per mol (eq/mol) of glycidyl epoxy groups. An epoxidized styrene-acrylic copolymer, CESA, represents an exemplary polymeric coupler component. CESA is a copolymer of styrene, methyl methacrylate, and glycidyl methacrylate.

An exemplary CESA according to the methods of the present disclosure has average molecular weight of about 6800 g/mol and an epoxy equivalent of 280 g/mol. As used herein, the epoxy equivalent is an expression of the epoxide content of a given compound. The epoxy equivalent is the number of epoxide equivalents in 1 kg of resin (eq./g).

In some embodiments, the coupler component may comprise up to about 20 wt. % of the polymer composition. The coupler component may be present in an amount of up to about 20 wt. % based on the total weight of the composition, including representative values of about 3 wt. %, about 4 wt. %, about 5 wt. %, about 6 wt. %, about 7 wt. %, about 8 wt. %, about 9 wt. %, about 10 wt. %, about 11 wt. %, about 12 wt. %, about 13 wt. %, about 14 wt. %, about 15 wt. %, about 16 wt. %, about 17 wt. %, about 18 wt. %, about 19 wt. %, about 20 wt. % and any combination of ranges therebetween. In one embodiment the coupler component may be present in an amount of about 5 wt. % based on the total weight of the composition. ,

The coupler component may comprise a polyepoxy in an amount between about 5 wt. % and 20 wt. % based on the total weight of the dynamic or pre-dynamic cross-linked composition.

Cross-linking of the dynamic (and pre-dynamic) cross-linking composition may be affected by the chemical composition of the coupler component, particularly where the coupler component comprises an epoxy or a polyepoxy. It has been found that the amount of and the chemical composition of the epoxy coupler component may affect the cross-linking of the DCN composition. As an example, the elastic modulus at high temperature may vary as a function of the amount of epoxide.

As a further example, the epoxy/end group ratio may also alter cross-linking. Axial force (i.e., viscosity) may reach a maximum as the epoxy/end group ratio approaches 1. Without being bound to any particular theory, this may occur because at high concentration of epoxy, the probability for an end group to react with a diepoxy non-linked to the polyester component is higher than the probability to react with another chain already functionalized with epoxy thus leading to a poor chain extension. Due to the presence of side-chain hydroxyl groups, the material is still able to cross-link but solely after a long extrusion. This cross-linking trend may also depend upon the type of catalyst. When extrusion

is performed in the presence of $Zn(acac)_2$ as the catalyst, the axial force signal, which is relatively low at the beginning, suddenly increases to eventually reach a maximum. The axial force may increase with the loading of epoxy component in this range of epoxy ratio. The rearrangement of bonds of hydroxyl-esters by transesterification may lead to the formation of new hydroxyl end groups. Therefore, it may be the case that more epoxy is integrated in the polyester component than what might be anticipated via stoichiometry calculations and the cross-link density may increase.

In further aspects, functional groups of the epoxy coupler component may affect DCN cross-linking. Specifically, the chemical structure of these functional groups and their proximity to any oxirane (ethylene oxide) groups of the epoxy coupler component. For example, the type of linking of a glycidyl group (either ester or ether) may impact the reactivity and network formation of DCN compositions. An acceleration of the network formation may be observed when glycidyl ester resins are used as the coupler component. With respect to axial force signal (N) analysis, a composition formed from a polyester and a $Zn^{2+}$ catalyst with a glycidyl ester may exhibit an increase in viscosity before a similar composition formed with a glycidyl ether. The proximity of hydroxyl groups in exemplary diglycidyl ethers such as BADGE or DER 671 may have no effect on network formation. However, for exemplary diglycidyl esters such as diglycidyl terephthalate and diglycidyl phthalate, an increase in axial force may occur more rapidly.

Another class of glycidyl compositions that may influence cross-linking includes ethylene-acrylic ester - glycidyl-methacrylate terpolymers (E/EA/GMA), commercially available as Lotader™ compounds, as shown in formula below.

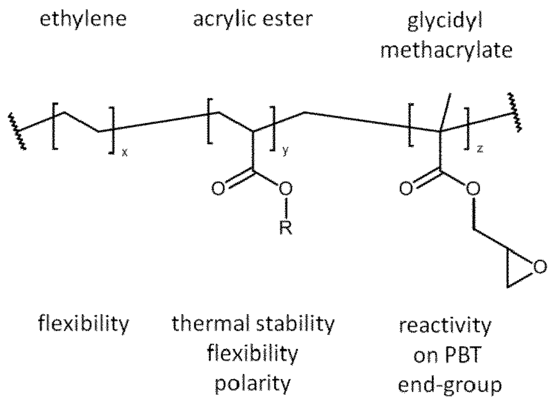


These Lotader™ compounds are often impact modifiers for polyesters such as PBT and PET. Depending upon the specific combination of polyester, catalyst, and Lotader™ impact modifier, the axial force profile may change. For example, Lotader™ and PBT in the presence of a $Zn^{2+}$ catalyst exhibit an earlier increase in viscosity when compared to a similar composition formed from Lotader™ and PBT in the presence of a Ti(IV) catalyst. The Ti(IV) catalyzed composition may exhibit a more gradual increase in axial force.

As a further example, Lotader™ and PBT may cross-link differently depending on the coupler component. For example, a Lotader™, PBT, and diglycidyl terephthalate coupler component, and a Ti(IV) catalyst may exhibit a first gradual increase in axial force followed by a second gradual increase in viscosity (for a (slower rate to gelation). With a diglycidyl ether such as BADGE, viscosity may gradually increase and then plateau.

The epoxy coupler component may include other functional groups such as an amine combined with the glycidyl group. As one example, tetraglycidyl methylene dianiline (TGMDA) may be used as a coupler component. In various aspects, TGMDA may form cross-links in the composition in the absence of a transesterification catalyst. However, tetra-functionality of TGMDA and the catalytic effect of its tertiary amine groups may induce a large increase in viscosity at the beginning of combining the DCN composition components. This large increase may be unsuitable for industrial processing.

## Catalysts

As provided herein, the pre-dynamic cross-linked polymer composition may, in some embodiments, comprise one or more catalysts, though this is not a requirement. The polyester component, coupler component, and non-networking component may be reacted in the presence of one or more suitable catalysts. Certain catalysts may be used to catalyze the reactions described herein. One or more catalysts may be used herein to facilitate the formation of a network throughout the compositions disclosed. In one embodiment, a catalyst may be used to facilitate the ring opening reaction of epoxy groups of the epoxy chain extender with the carboxylic acid end-group of the ester oligomer component. This reaction effectively results in chain extension and growth of the ester oligomer component via condensation, as well as to the in-situ formation of additional alcohol groups along the oligomeric backbone of the ester oligomer component. Furthermore, such a catalyst may subsequently facilitate the reaction of the generated alcohol groups with the ester

groups of the ester oligomer component (a process called transesterification), leading to network formation. When such a catalyst remains active, and when free alcohol groups are available in the resulting network, the continuous process of transesterification reactions leads to a dynamic polymer network.

As used herein, a "transesterification catalyst" catalyzes the reactions of the disclosure. The transesterification catalyst is used in an amount up to about 25 mol%, for example, 0.025 mol% to 25 mol%, of the total molar amount of ester groups in the polyester component. In some embodiments, the transesterification catalyst is used in an amount of from 0.025 mol% to 10 mol% or from 1 mol% to less than 5 mol%. Preferred embodiments include 0.025, 0.05, 0.1, 0.2 mol% of catalyst, based on the number of ester groups in the polyester component. Alternatively, the catalyst is used in an amount of from 0.1 % to 10% by mass relative to the total mass of the reaction mixture, and preferably from 0.5% to 5%.

Transesterification catalysts are known in the art and are usually chosen from metal salts, for example, acetylacetonates, of zinc, tin, magnesium, cobalt, calcium, titanium, and zirconium.

Rare earth salts of alkali metals and alkaline earth metals, particularly rare earth acetates, alkali metal and alkaline earth metals such as calcium acetate, zinc acetate, tin acetate, cobalt acetate, nickel acetate, lead acetate, lithium acetate, manganese acetate, sodium acetate, and cerium acetate are other catalysts that can be used in the disclosure. Salts of saturated or unsaturated fatty acids and metals, alkali metals, alkaline earth and rare earth metals, for example zinc stearate, are also envisioned as suitable catalysts.

Other catalysts that can be used in the disclosure include metal oxides such as zinc oxide, antimony oxide, and indium oxide; metal alkoxides such as titanium tetrabutoxide, titanium propoxide, titanium isopropoxide, titanium ethoxide, zirconium alkoxides, niobium alkoxides, tantalum alkoxides; alkali metals; alkaline earth metals, rare earth alcoholates and metal hydroxides, for example sodium alcoholate, sodium methoxide, potassium alkoxide, and lithium alkoxide; sulfonic acids such as sulfuric acid, methane sulfonic acid, paratoluene sulfonic acid; phosphines such as triphenylphosphine, dimethylphenylphosphine, methyldiphenylphosphine, triterbutylphosphine; and phosphazenes.

The catalyst may also be an organic compound, such as benzyldimethylamide or benzyltrimethylammonium chloride. These catalysts are generally in solid form, and advantageously in the form of a finely divided powder. A preferred catalyst is zinc(II)acetylacetonate. Suitable transesterification catalysts are also described in Otera, J. Chem. Rev. 1993, 93, 1449-1470. Tests for determining whether a catalyst will be appropriate for a given polymer system within the scope of the disclosure are described in, for example, U.S. Published Application No. 2011/0319524 and WO 2014/086974.

The transesterification catalyst used in the methods of the disclosure may include one or more catalysts. In some embodiments, the transesterification catalyst is zinc(II)acetylacetonate. In other embodiments, the transesterification catalyst is chromium(III)acetylacetonate. In still other embodiments, the transesterification catalyst is titanium(IV)$(OBu)_4$. In some embodiments, the transesterification catalyst is a mixture of zinc(II)acetylacetonate, chromium(III)acetylacetonate, and tetrabutyl titanate $Ti(OBu)_4$.

One or more of the catalysts used in the methods of the invention may be added as a separate component of the reaction mixture. In other embodiments, one or more of the catalysts may be inherently present in the polyester component as a residual catalyst from the polyester polymerization process.

As provided herein, varying selected reaction parameters may affect the material properties of the resultant pre-dynamic or dynamically cross-linked polymer composition. In one aspect, the amount of catalyst may be adjusted to alter the rate and nature of the cross-linking exchange reactions. Reaction systems prepared with less catalyst may take more time during processing for gelation (formation of cross-links) to occur.

In one aspect, where varying concentrations of $Zn(acac)_2$ has been used with the same epoxy/end group ratio, catalyst amount affected cross-linking. In the absence of the zinc catalyst, the time to form a network is considerably longer. When a small amount of $Zn(acac)_2$ is added (i.e., 0.5 mol% of catalyst with respect to the number to end groups) the time for the axial force to reach a plateau (cross-linking to occur) was divided by two. At 10 mol% of catalyst the time needed to form the network reduces again. Thus, gelation time may be altered by the amount of $Zn^{2+}$ catalyst.

Above the melting temperature of the polyester component, the value of the elastic modulus may also increase significantly with the amount of catalyst based on dynamic mechanic analysis. Furthermore, the characteristic time in stress relaxation experiments may increase with the loading of zinc catalyst.

In a further aspect the type of catalyst may directly affect the rate and nature of the cross-linking reactions. For example, hydrate catalysts such as zinc $(OAc)_2$ in hydrate form may introduce moisture into the cross-linking system. As with the presence of humidity during the reaction process, may cause chain scissions and decrease ratio of epoxy groups of the coupler component to hydroxyl and carboxylic acid groups of the polyester component. Maximum axial force is lower.

With respect to catalyst type, triazabicyclodecene (TBD) is known as a strong catalyst of transesterification and may facilitate a faster increase in viscosity compared to other catalysts. TBD is an also organic molecule that can diffuse easily whereas $Zn^{2+}$ is strongly coordinated in the network. TBD belongs to the family of guanidine catalysts. In the literature, the activity of these molecules may be attributed to their dual functionality (as both a Lewis base and a

Brönsted acid). When testing with 2-methylimidazole (2-MI) as a catalyst, the maximum axial force obtained for a composition formed with 2-MI occurred later than when TBD is used.

The specific characteristics of a catalyst may, of course, influence the reaction progress. For example, a solid Ti(IV) catalyst such as titanium bis(3-phenoxy-1,2-propane dioxide) may especially facilitate network cross-linking. Liquid catalysts such as tetrabutyl titanate ($Ti(OBu)_4$) and tetraisopropyl orthotitanate ($(Ti(O-i-Pr)_4$ may have different effects, at least in some coupler components. The solid Ti(IV) catalyst still may not be as efficient as the $Zn^{2+}$ catalysts at least with respect to certain coupler components. As such, with Ti(IV) catalysts' gelation may take place in a more gradual way, which allows greater control over network formation at least with respect to glycidyl ester compounds.

Without being bound to any particular theory, the type of catalyst and type of coupler component may inform one another with respect to the effect on cross-linking in the DCN composition. The axial force analysis for diglycidyl ester type coupler components and diglycidyl ether type coupler component may vary depending upon the type of catalyst used. As a further example, the characteristic increase in viscosity in the force profile may occur at longer residence times for both diglycidyl ester and ether coupler components where the catalyst comprises an imidazole such as 2-methylimidazole (2-MI). The imidazole catalyst is an efficient and non-selective catalyst for both hydroxyl and acid additions, but may have lesser activity for transesterifications. For certain Ti(IV) catalysts, the axial force profiles for diglycidyl ether and diglycidyl ester components may be drastically different. For the diglycidyl ether, no increase in viscosity may occur during the residence time. Conversely, for the diglycidyl ester, the viscosity increase (gelation) may occur quickly. With $Zn^{2+}$ catalysts, gelation may occur for both diglycidyl esters and ethers, but the reaction may be faster for diglycidyl esters.

## Other Additives

The compositions of the disclosure may comprise a UV stabilizer for dispersing UV radiation energy. The UV stabilizer does not substantially hinder or prevent cross-linking of the various components of the compositions of the disclosure. UV stabilizers may be hydroxybenzophenones; hydroxyphenyl benzotriazoles; cyanoacrylates; oxanilides; or hydroxyphenyl triazines. Specific UV stabilizers include poly[(6-morphilino-s-triazine-2,4-diyl)[2,2,6,6-tetramethyl-4-piperidyl)imino]-hexamethylene[(2,2,6,6-tetramethyl-4-piperidyl)imino], 2-hydroxy-4-octyloxybenzophenone (Uvinul®3008); 6-tert-butyl-2-(5-chloro-2H-benzotriazole-2-yl)-4-methylphenyl (Uvinul® 3026); 2,4-di-tert-butyl-6-(5-chloro-2H-benzotriazole-2-yl)-phenol (Uvinul®3027); 2-(2H-benzotriazole-2-yl)-4,6-di-tert-pentylphenol (Uvinul®3028); 2-(2H-benzotriazole-2-yl)-4-(1,1,3,3-tetramethylbutyl)-phenol (Uvinul® 3029); 1,3-bis[(2'-cyano-3',3'-diphenylacryloyl)oxy]-2,2-bis-{[(2'-cyano-3',3'-diphenylacryloyl)oxy]methyl}-propane (Uvinul® 3030); 2-(2H-benzotriazole-2-yl)-4-methylphenol (Uvinul® 3033); 2-(2H-benzotriazole-2-yl)-4,6-bis(1-methyl-1-phenyethyl) phenol (Uvinul® 3034); ethyl-2-cyano-3,3-diphenylacrylate (Uvinul® 3035); (2-ethylhexyl)-2-cyano-3,3-diphenylacrylate (Uvinul® 3039); N,N'-bisformyl-N,N'-bis (2,2,6,6-tetramethyl-4-piperidinyl)hexamethylenediamine (Uvinul® 4050H); bis-(2,2,6,6-tetramethyl-4-pipieridyl)-sebacate (Uvinul® 4077H); bis-(1,2,2,6,6-pentamethyl-4-piperdiyl)-sebacate + methyl-(1,2,2,6,6-pentamethyl-4-piperidyl)-sebacate (Uvinul® 4092H); or combinations thereof. Other UV stabilizers include Cyasorb 5411, Cyasorb UV-3638, Uvinul 3030, and/or Tinuvin 234.

The compositions of the disclosure may comprise heat stabilizers. Exemplary heat stabilizer additives include, for example, organophosphites such as triphenyl phosphite, tris-(2,6-dimethylphenyl)phosphite, tris-(mixed mono-and di-nonylphenyl)phosphite or the like; phosphonates such as dimethylbenzene phosphonate or the like; phosphates such as trimethyl phosphate, or the like; or combinations thereof.

The compositions of the disclosure may comprise an antistatic agent. Examples of monomeric antistatic agents may include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents may include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PELESTAT® 6321 (Sanyo) or PEBAX® MH1657 (Atofina), IRGASTAT® P18 and P22 (Ciba-Geigy). Other polymeric materials may be used as antistatic agents are inherently conducting polymers such as polyaniline (commercially available as PANIPOL®EB from Panipol), polypyrrole and polythiophene (commercially available from Bayer), which retain some of their intrinsic conductivity after melt processing at elevated temperatures. Carbon fibers, carbon nanofibers, carbon nanotubes, carbon black, or a combination comprising at least one of the foregoing may be included to render the compositions of the disclosure electrostatically dissipative.

The compositions of the disclosure may comprise anti-drip agents. The anti-drip agent may be a fibril forming

or non-fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise 50 wt % PTFE and 50 wt % SAN, based on the total weight of the encapsulated fluoropolymer. The SAN can comprise, for example, 75 wt% styrene and 25 wt% acrylonitrile based on the total weight of the copolymer. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer.

The compositions of the disclosure may comprise a radiation stabilizer, such as a gamma-radiation stabilizer. Exemplary gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-penten-2-ol, and 9 to decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group ($-CH_2OH$) or it can be a member of a more complex hydrocarbon group such as $-CR^{24}HOH$ or-$CR^{24}{}_2OH$ wherein $R^{24}$ is a complex or a simple hydrocarbon. Specific hydroxy methyl aromatic compounds include benzhydrol, 1,3-benzenedimethanol, benzyl alcohol, 4-benzyloxy benzyl alcohol and benzyl alcohol. 2-Methyl-2,4-pentanediol, polyethylene glycol, and polypropylene glycol are often used for gamma-radiation stabilization.

The term "pigments" means colored particles that are insoluble in the resulting compositions of the disclosure. Exemplary pigments include titanium oxide, carbon black, carbon nanotubes, metal particles, silica, metal oxides, metal sulfides or any other mineral pigment; phthalocyanines, anthraquinones, quinacridones, dioxazines, azo pigments or any other organic pigment, natural pigments (madder, indigo, crimson, cochineal, etc.) and mixtures of pigments. The pigments may represent from 0.05% to 15% by weight relative to the weight of the overall composition.

The term "dye" refers to molecules that are soluble in the compositions of the disclosure and that have the capacity of absorbing part of the visible radiation.

Exemplary fibers include glass fibers, carbon fibers, polyester fibers, polyamide fibers, aramid fibers, cellulose and nanocellulose fibers or plant fibers (linseed, hemp, sisal, bamboo, etc.) may also be envisaged.

Pigments, dyes or fibers capable of absorbing radiation may be used to ensure the heating of an article based on the compositions of the disclosure when heated using a radiation source such as a laser, or by the Joule effect, by induction or by microwaves. Such heating may allow the use of a process for manufacturing, transforming or recycling an article made of the compositions of the disclosure.

Suitable fillers for the compositions of the disclosure include: silica, clays, calcium carbonate, carbon black, kaolin, and whiskers. Other possible fillers include, for example, silicates and silica powders such as aluminum silicate, synthetic calcium silicate, zirconium silicate, fused silica, crystalline silica graphite, natural silica sand, or the like; boron powders such as boron-nitride powder, boron-silicate powders, or the like; oxides such as $TiO_2$, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Plasticizers, lubricants, and mold release agents can be included. Mold release agent (MRA) will allow the material to be removed quickly and effectively. Mold releases can reduce cycle times, defects, and browning of finished product. There is considerable overlap among these types of materials, which may include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate, stearyl stearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like.

Various types of flame retardants can be utilized as additives. In one embodiment, the flame retardant additives include, for example, flame retardant salts such as alkali metal salts of perfluorinated $C_1$-$C_{16}$ alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, $BaSiF_6$, $KBF_4$, $K_3AlF_6$, $KAlF_4$, $K_2SiF_6$, and/or $Na_3AlF_6$ or the like. Rimar salt and KSS and NATS, alone or in combination with other flame retardants, are particularly useful in the compositions disclosed herein. In certain embodiments, the flame retardant does not contain bromine or chlorine.

The polymer compositions produced according to the disclosure can be dynamic cross-linked polymer compositions and can be used in any application which would benefit from the use of a dynamic cross-linked polymer composition. Articles, for example, molded, formed, shaped, or extruded articles, can be prepared using the polymer compositions produced according to the described methods. The term "article" refers to the compositions of the disclosure being formed into a particular shape. *See, e.g.,* U.S. Provisional Application Nos. 62/026,458; 62/026,465; 62/138,465; 62/138,807; and 62/026,454, the entireties of which are incorporated by reference herein.

## Illustrative Examples

The following examples are provided to illustrate the compositions, processes, and properties of the present disclosure. The examples are illustrative only and do not limit the disclosure to any of the materials, conditions, or process parameters set forth therein.

### Materials

PBT (Valox® 315)
PBT (Valox® 195)
Zinc(II)acetate ($H_2O$) (Acros Chemicals)
Titanium(IV) isopropoxide (tetraisopropyl titanate, TPT) (Commercial Tyzor grade, Dorf Ketal)
Triazabicyclodecene (TBD)
Zinc acetylacetonate ($Zn(acac)_2$)
Zinc acetate dihydrate ($Zn(OAc)_2$)
2-methylimidazole (2-MI)
Tetrabutyl titanate ($Ti(OBu)_4$, liquid)
Tetraisopropyl orthotitanate (liquid)
Titanium bis(3-phenoxy-l,2-propane dioxide) $Ti(PPD)_2$ (solid)
Diglycidyl terephthalate
Diglycidyl phthalate
Resorcinol diglycidyl ether
Bisphenol A diglycidyl ether (D. E. R.™ 332)
D.E.R. ™ 671
Tetrabromobisphenol A diglycidyl ether
Bisphenol F diglycidyl ether
3,4-epoxycyclohexylmethyl-3',4'-epoxycyclohexane carboxylate

### Example 1: Effect of Catalyst Chemical Nature

Eight different catalysts, as shown in FIG. 5, were tested to demonstrate their influence on chain extension and ransesterification reactions. Blending of PBT with modifiers, catalysts and antioxidant was performed in a single step by extrusion. A 10 g mass of well-dried PBT pellets were introduced, together with the diepoxy (DER332 0.17 g), $Zn(acac)_2$ catalyst (16 mg) and an antioxidant (Irganox 1010, 10 mg) into a DSM Xplore 15-cc twin-screw compounder under nitrogen flux. The rotor speed and the temperature were set typically respectively at 60 rpm and 270 °C. Mixing time

was fixed typically at 10 min. The axial force exercised on the barrel of the extruder, which can be used to follow qualitatively the change of viscosity, was recorded as a function of the residence time. At high loading of diepoxy, a part of the extrudate was purged out from the compounder (~1.5 g) during extrusion to keep the axial force under the 8000 N limitation of the equipment.

Axial force signal analysis results of extrusion experiments are reported in FIG. 5. As shown, a TBD sample had an early rise in the rate of viscosity. These results also indicate the effect of the ligand present in the Zn(II) catalyst. $Zn(OAc)_2$ in its hydrate form includes two water molecules per zinc molecule while $Zn(acac)_2$ is hydrated with molecule of water per zinc atom. Water molecules cause chain scissions and decrease of the [epoxy]/[OH + COOH] ratio so that the maximum of the axial force is lower in the case of $Zn(OAc)_2$. The usual Ti(IV) catalysts appeared to have no effect on network formation and as liquids. The Ti(IV) were also subject to atmospheric hydrolysis. The solid Ti(IV) catalyst ($Ti(PPD)_2$) accelerated the network formation.

Example 2: Influence of Functional Groups and Coupler Component

As shown in FIG. 6, eight commercial diepoxy (a-h) were selected and applied as the coupler component in the DCN compositions. Blending of PBT, catalysts and coupler component was performed in a single step by extrusion. Typically, 10 g of well-dried PBT pellets were introduced, together with the diepoxy, $Zn(acac)_2$, catalyst and an antioxidant (Irganox 1010) into a DSM Xplore 15-cc twin-screw compounder under nitrogen flux. Rotor speed and the temperature were set typically respectively at 60 rpm and 270 °C. Mixing time was fixed typically at 10 min. Axial force monitoring during extrusion of PBT (Valox™ 315) at 270 °C with $Zn(acac)_2$ used at 10 mol% with respect to the number of end groups. FIG. 6 shows the axial force as a function of reaction time for various diepoxies (epoxy:end groups = 1.7) for (a) diglycidyl terephthalate (b) diglycidyl phthalate (c) resorcinol diglycidyl ether (d) bisphenol a diglycidyl ether (der 332) (e) der 671 (f) tetrabromobisphenol a diglycidyl ether (g) bisphenol f diglycidyl ether (h) 3,4-epoxycyclohexylmethyl-3',4'-epoxycyclohexane carboxylate. At high loading of diepoxy, a part of the extrudate was purged out from the compounder (~1.5 g) during extrusion to keep the axial force under the 8000 N maximum of the equipment.

The axial force analysis for samples a-h comprising different diepoxies is shown. While cycloaliphatic diepoxies have been reported to be the more effective than BADGE for chain-extension, the present results demonstrated no increase of viscosity when using compound has cross-linker. Even after 20 min no increases of axial force signal was observed. Without being bound to any particular theory, one may make hypotheses. Firstly, the hydroxyl formed after opening the epoxide is located on the ring and can be less accessible for transesterification. Secondly, the resin h possesses an ester bond in the middle of the molecule, and therefore transesterification can cut the molecule in two parts which can be subject to partial evaporation at high temperature.

Formation of a PBT-DCN network also depended on the ligand present in the $Zn^{2+}$ catalyst. $Zn(OAc)_2$ is in its hydrate form with two water molecules per zinc molecule while $Zn(acac)_2$ is hydrated with 1 molecule of water per zinc atom. Then the maximum of the axial force is lower in the case of $Zn(OAc)_2$. The liquid Ti(IV) catalysts commonly encountered in PBT chemistry have no apparent effect on the network formation. The solid Ti(IV) catalysts accelerated the network formation but were less efficient than $Zn^{2+}$ based catalysts.

Example 3: Combined Effect of Glycidyl Ester and Choice of Metal Catalyst

Samples were prepared as described in Example 2 except that the samples varied according to type of epoxy resin (diglycidyl ether or diglycidyl ester) and four different catalyst types (zinc acetate dihydrate ($Zn(OAC)_2$); 2-methylimidazole (2-MI); tetrabutyl titanate ($Ti(OBu)_4$, liquid; and no catalyst). FIG. 7 provides the axial force signals for the diglycidyl ether and diglycidyl ester compositions. The left panel shows the results obtained with a diglycidyl ether type resin (resorcinol diglycidyl ether) whereas the right panel shows the results obtained with the diglycidyl ester-type one terephthalate). In these plots the composition marked as "no catalyst" as well as all other composition in reality contain a low level of Ti(IV) catalyst (~200 ppm) already present in PBT before extrusion.

In the presence of 2-MI, viscosity increase takes place for both resins at comparatively long extrusion times and viscosity follows quite the same profile. For "no catalyst" and "$Ti(OBu)_4$" that contain solely Ti(IV) at two different concentrations, the behavior is different in the presence of either diglycidyl ether or diglycidyl ester type resins. In the first case, nothing happens in our time experiment whereas in the second case gelation takes place at rather short times. Where $Zn^{2+}$ is present, gelation occurs quickly in both cases but it is even faster with the diglycidyl ester type resin. $Ti(OBu)_4$ is a suitable catalyst for diglycidyl ester resins; when this catalyst is well introduced, the network formation is the same as with the solid catalyst ($Ti(PPD)_2$).

Example 4: Influence of Lotader™ Quantity on Network Formation

To evaluate the formulation of functional PBT-DCN compositions combining improved properties both below

and above the melting temperature of the PBT base resin, blends of PBT (80 wt%), Lotader™ (20 mol%) and a diepoxy (1.7 epoxy:end groups) were prepared. FIG. 8 shows the axial force monitoring analysis during extrusion at 270 °C of PBT/Lotader™ blends (80/20) with diepoxy (1.7 epoxy: end groups) and catalyst (10 mol%: end groups). In a first step, the extrusion was performed in the presence of BADGE as diepoxy. When Lotader™ and diepoxy are mixed with PBT in the presence of $Zn(acac)_2$, the axial force jumps to high values at early times. In contrast presence of $Ti(PPD)_2$ instead of $Zn^{2+}$, A smooth increase of the axial force was observed during first minutes followed by a plateau during at least 15 min. In a second step, the chemical nature of the diepoxy was varied and the axial force signal was recorded (FIG. 8). During extrusion of blend incorporating PBT, Lotader™, diglycidyl terephthalate and $Ti(PPD)_2$ catalyst, exhibited a smooth increase of the axial force followed by a second smooth increase from 12 min to 30 min. In comparison, the BADGE/DBGEA sample showed a similar first increase of the axial force suggesting that the first step is due to the reaction of PBT with the impact modifier Lotader™ while the second step is due to the reaction with the epoxy resin.

Illustrative Aspects

In one aspect, the present disclosure provides method of forming a pre-dynamic cross-linked polymer composition, comprising: combining poly(butylene terephthalate), poly(ethylene terephthalate), or both with one or more of the following polyepoxy- coupler components:

(a) diglycidyl terephthalate, (b) diglycidyl phthalate, (c) resorcinol diglycidyl ether, (d) bisphenol A diglycidyl ether (which may be present in monomer, polymer/oligomer, or both forms), (e) tetrabromobisphenol A diglycidyl ether, (f) bisphenol F diglycidyl ether or (g) 3,4-epoxycyclohexylmethyl-3',4'-epoxycyclohexane carboxylate, or (h) tetraglycidyl methylene dianiline.

The combining is suitably performed in the of one or more of the following transesterification catalysts:

(a) 2-methylimidazole, (b) 1,5,7-Triazabicyclo[4.4.0]dec-5-ene (TBD), (c) zinc acetate hydrate, (d) zinc lactate, (e) titanium(IV) butoxide, (f) titanium(IV) isopropoxide, or (g) $Ti(PPD)_2$.

The combining may be effected so as to form a pre-dynamically-crosslinked composition.

Combining may be performed at, e.g., from about 40 °C and about 320 °C. The combining may be peformed for, e.g., 1-60 mins, e.g., less than about 2.5 minutes. Combining may be performed under an inert atmosphere.

In some embodiments, the polyepoxy- coupler component comprises diglycidyl terephthalate. In some embodiments, the polyepoxy- coupler component comprises diglycidyl phthalate. In some embodiments, the polyepoxy- coupler component comprises resorcinol diglycidyl ether, DER 671, bisphenol A diglycidyl ether, tetrabromobisphenol A diglycidyl ether, bisphenol F diglycidyl ether, or any combination thereof.

In some embodiments, the polyepoxy- coupler component comprises 3,4-epoxycyclohexylmethyl-3',4'-epoxycyclohexane carboxylate. The polyepoxy- coupler component may also comprise tetraglycidyl methylene dianiline.

The transesterification catalyst may comprise 2-methylimidazole. The transesterification catalyst may also comprises 1,5,7-Triazabicyclo[4.4.0]dec-5-ene (TBD). In some embodiments, the transesterification catalyst comprises zinc acetate hydrate, zinc lactate, or any combination thereof. The transesterification catalyst may also comprises titanium(IV) butoxide, titanium(IV) isopropoxide, or any combination thereof. In some embodiments, the transesterification catalyst may comprise $Ti(PPD)_2$. The transesterification catalyst may be present in an amount of about 0.025 mol% to about 25 mol%, based on the number of ester moieties in the poly(butylene terephthalate).

The methods may also comprise effecting inclusion in the pre-dynamically cross-linked composition a dye, a filler, a plasticizer, a fiber, a flame retardant, an antioxidant, a lubricant, wood, glass, metal, an ultraviolet agent, an anti-static agent, an anti-microbial agent, or a combination thereof. One or more of the foregoing may be mixed with the poly(butylene terephthalate) and polyepoxy- coupler component. One or more of the foregoing may also be mixed with the pre-DCN.

In some embodiments, the polyepoxy coupling component comprises an ethylene - acrylic ester - glycidyl methacrylate terpolymer. In some embodiments, a user may include separately in the mixture an amount of an ethylene - acrylic ester - glycidyl methacrylate terpolymer that is in addition to a polyepoxy- coupler component that may be present.

While aspects of the present disclosure can be described and claimed in a particular statutory class, such as the system statutory class, this is for convenience only and one of skill in the art will understand that each aspect of the present disclosure can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational

flow, plain meaning derived from grammatical organization or punctuation, or the number or type of aspects described in the specification.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon. Nothing herein is to be construed as an admission that the present disclosure is not entitled to antedate such publication by virtue of prior disclosure. Further, the dates of publication provided herein can be different from the actual publication dates, which can require independent confirmation.

## Claims

1. A method of forming a pre-dynamic cross-linked polymer composition, comprising:

   combining poly(butylene terephthalate), poly(ethylene terephthalate), or both, with one or more of the following polyepoxy- coupler components:

   (a) diglycidyl terephthalate, (b) diglycidyl phthalate, (c) resorcinol diglycidyl ether, (d) bisphenol A diglycidyl ether, (e) tetrabromobisphenol A diglycidyl ether, (f) bisphenol F diglycidyl ether or (g) 3,4-epoxycyclohexylmethyl-3',4'-epoxycyclohexane carboxylate, or (h) tetraglycidyl methylene dianiline,

   the combining being performed in the presence of one or more of the following transesterification catalysts:

   (a) 2-methylimidazole, (b) 1,5,7-Triazabicyclo[4.4.0]dec-5-ene (TBD), (c) zinc acetate hydrate, (d) zinc lactate, (e) titanium(IV) butoxide, (f) titanium(IV) isopropoxide, or (g) $Ti(PPD)_2$, and

   the combining being performed so as to form a pre-dynamically-crosslinked composition.

2. The method of claim 1, wherein the combining is performed at from about 40 °C and about 320 °C.

3. The method of any of claims 1-2, wherein the polyepoxy- coupler component comprises diglycidyl terephthalate, diglycidyl phthalate, or any combination thereof.

4. The method of any of claims 1-2, wherein the polyepoxy- coupler component comprises resorcinol diglycidyl ether, bisphenol A diglycidyl ether, tetrabromobisphenol A diglycidyl ether, bisphenol F diglycidyl ether, or any combination thereof.

5. The method of any of claims 1-2, wherein the polyepoxy- coupler component comprises 3,4-epoxycyclohexylmethyl-3',4'-epoxycyclohexane carboxylate.

6. The method of any of claims 1-2, wherein the polyepoxy- coupler component comprises tetraglycidyl methylene dianiline.

7. The method of claims 1-6, wherein the transesterification catalyst comprises $Ti(PPD)_2$.

8. The method of any of claims 1-6, wherein the transesterification catalyst comprises 2-methylimidazole.

9. The method of any of claims 1-6, wherein the transesterification catalyst comprises 1,5,7-triazabicyclo[4.4.0]dec-5-ene (TBD).

10. The method of any of claims 1-6, wherein the transesterification catalyst comprises zinc acetate hydrate, zinc lactate, or any combination thereof.

11. The method of any of claims 1-6, wherein the transesterification catalyst comprises titanium(IV) butoxide, titanium(IV) isopropoxide, or any combination thereof.

12. The method of any of the preceding claims, wherein the transesterification catalyst is present in an amount of about

0.025 mol% to about 25 mol%, based on the number of ester moieties in the poly(butylene terephthalate).

**13.** The method of any of the preceding claims, further comprising effecting inclusion in the pre-dynamically cross-linked composition a dye, a filler, a plasticizer, a fiber, a flame retardant, an antioxidant, a lubricant, wood, glass, metal, an ultraviolet agent, an anti-static agent, an anti-microbial agent, or a combination thereof.

**14.** The method of any of the preceding claims, wherein the polyepoxy coupling component comprises an ethylene - acrylic ester - glycidyl methacrylate terpolymer.

**15.** The method of any of claims 1-14, further comprising including in the mixture an amount of an ethylene - acrylic ester - glycidyl methacrylate terpolymer.

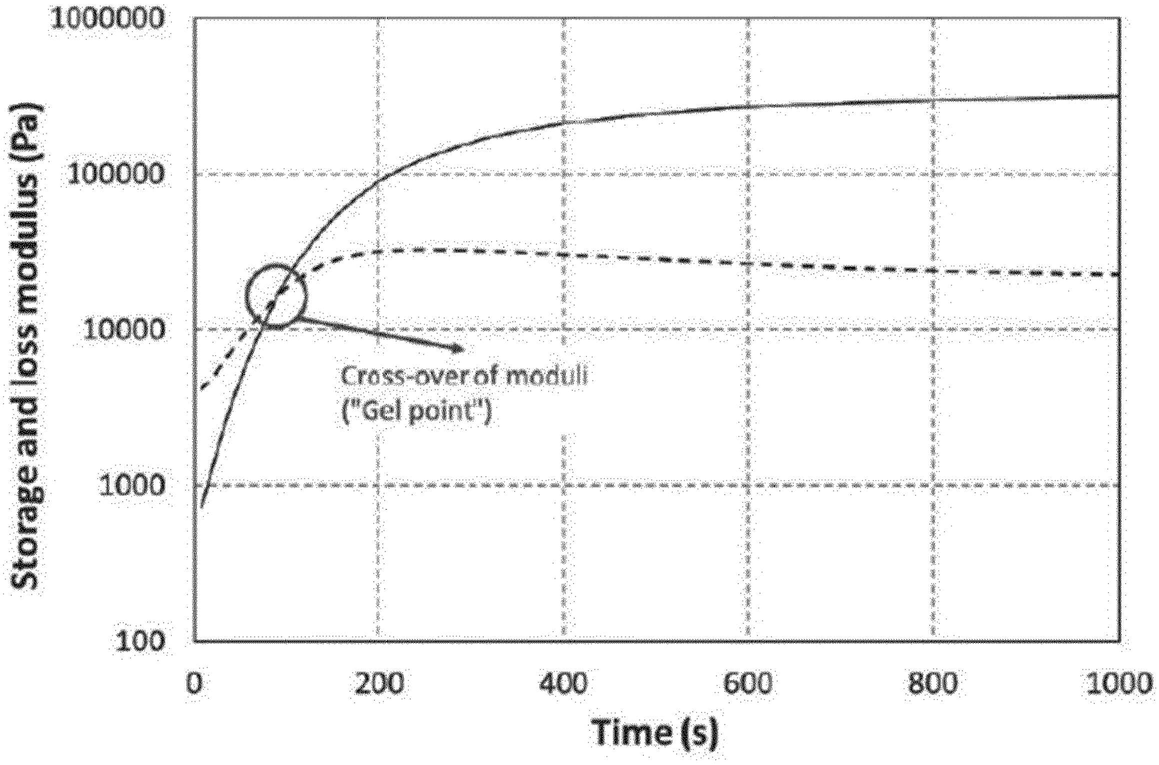
1000000
100000
10000
1000
100
Storage and loss modulus (Pa)
0
200
400
600
800
1000
Time (s)
Cross-over of moduli
("Gel point")

FIG. 1

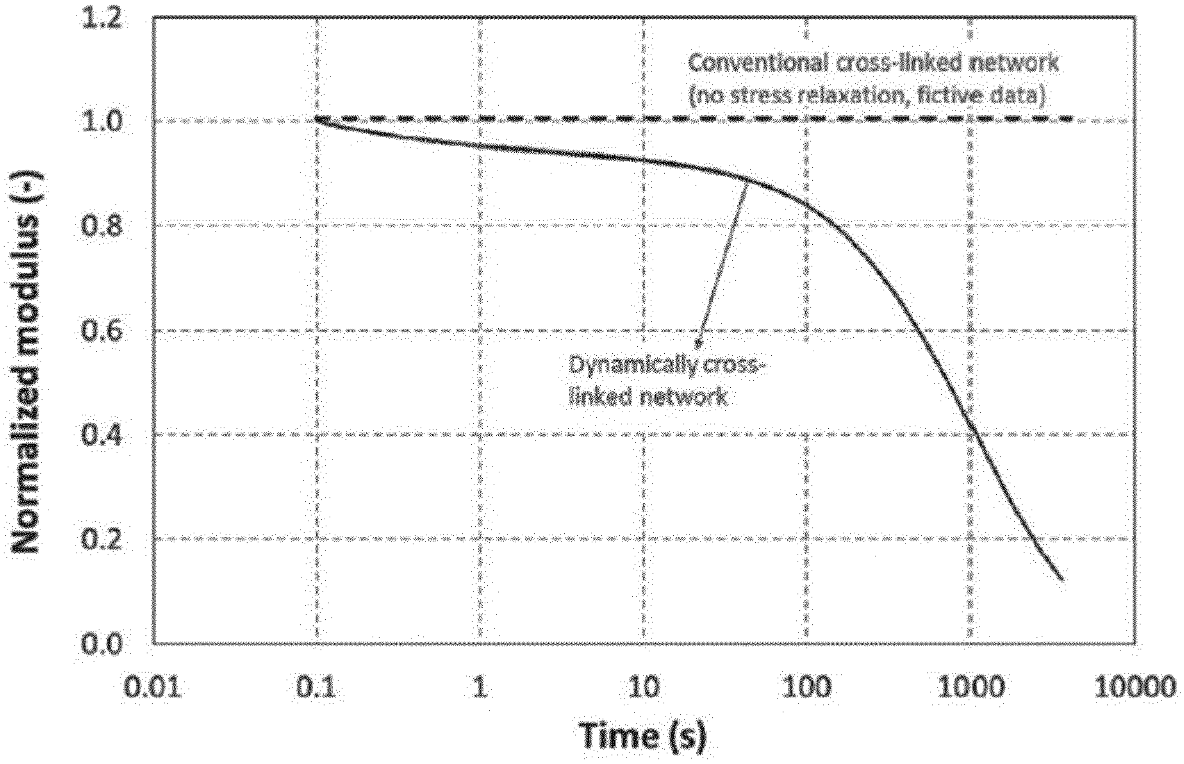
1.2
1.0
0.8
0.6
0.4
0.2
0.0
Normalized modulus (-)
Conventional cross-linked network
(no stress relaxation, fictive data)
Dynamically cross-
linked network
0.01
0.1
1
10
100
1000
10000
Time (s)

FIG. 2

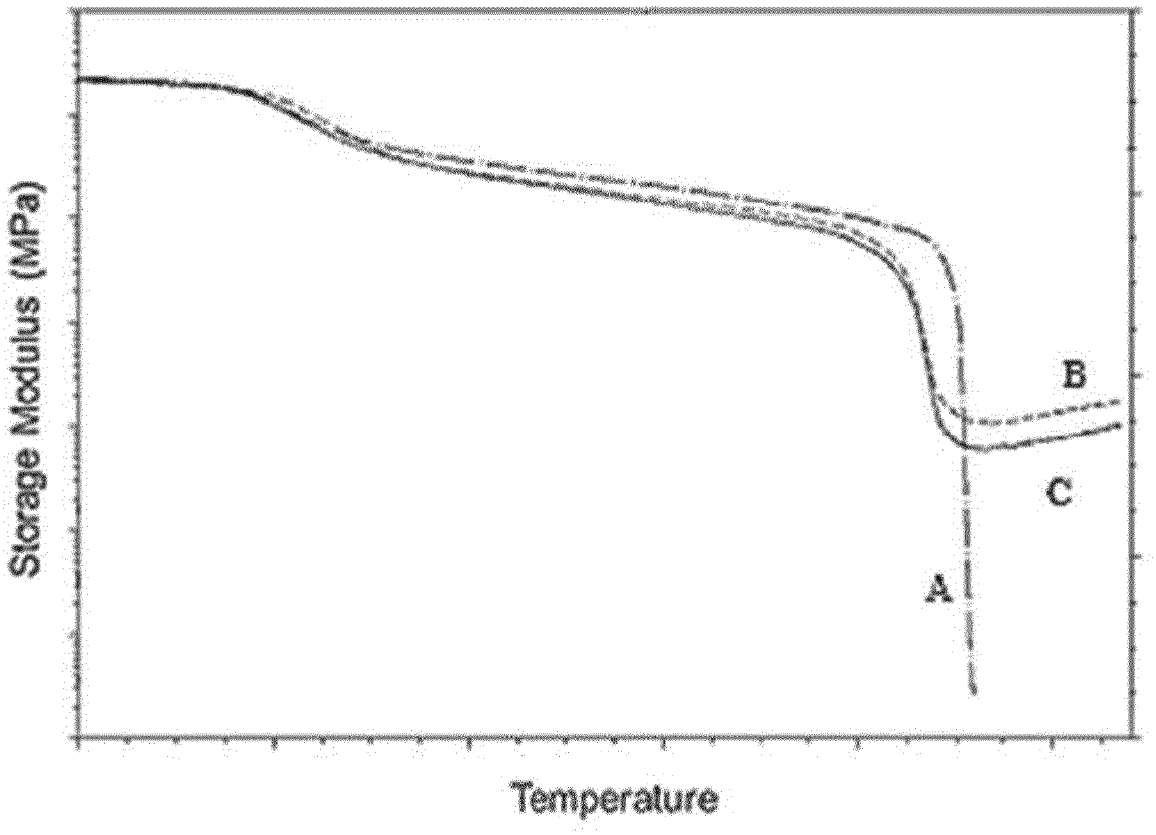


FIG. 3

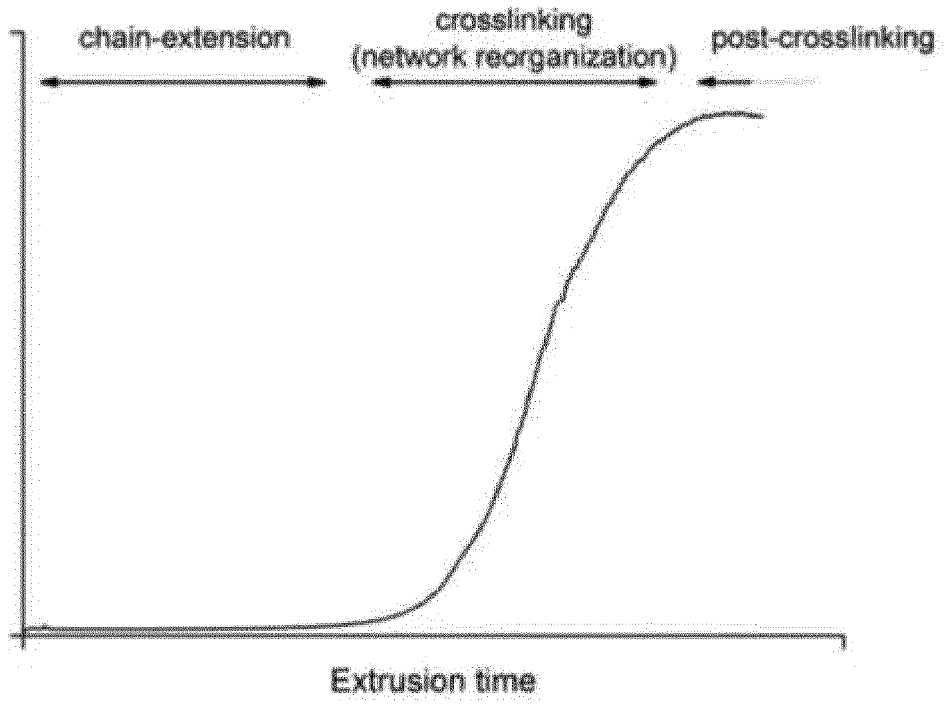
chain-extension
crosslinking
(network reorganization)
post-crosslinking
Extrusion time

FIG. 4

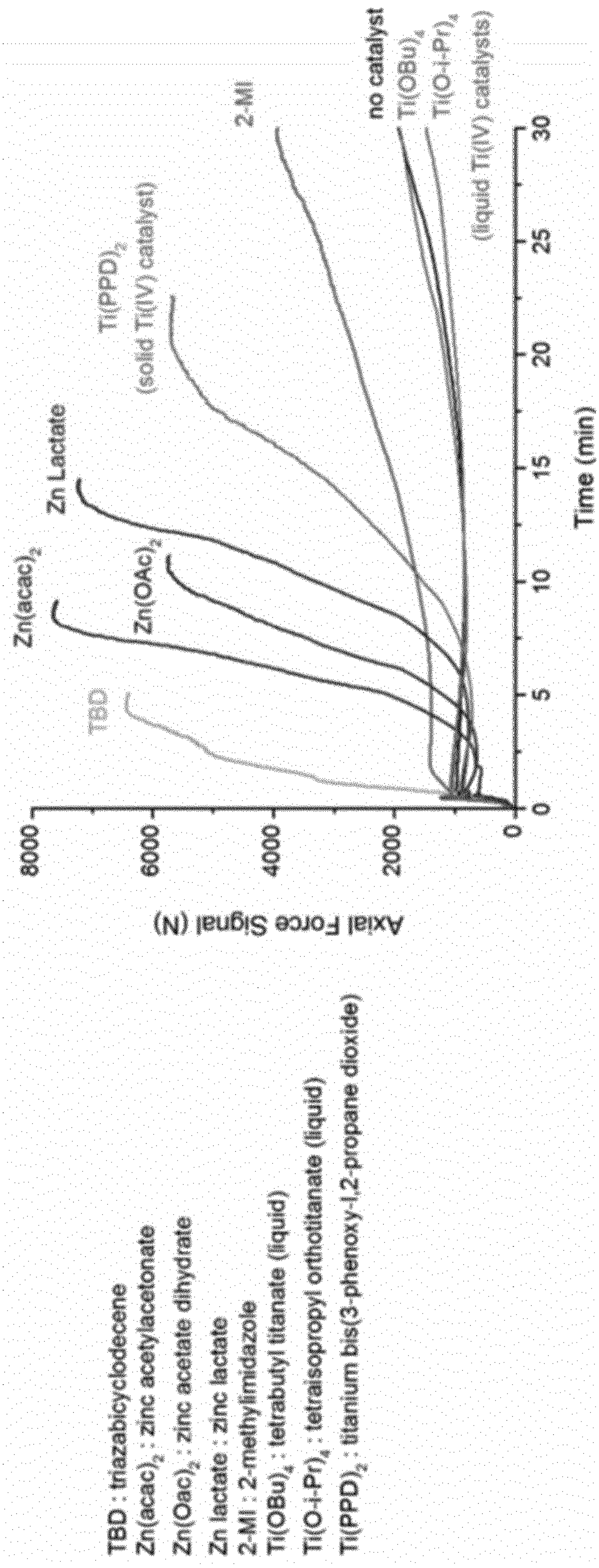
TBD
Zn(acac)$_2$
Zn(OAc)$_2$
Zn Lactate
Ti(PPD)$_2$
(solid Ti(IV) catalyst)
2-MI
no catalyst
Ti(OBu)$_4$
Ti(O-i-Pr)$_4$
(liquid Ti(IV) catalysts)
Axial Force Signal (N)
0
2000
4000
6000
8000
Time (min)
0
5
10
15
20
25
30
TBD : triazabicyclodecene
Zn(acac)$_2$ : zinc acetylacetonate
Zn(Oac)$_2$ : zinc acetate dihydrate
Zn lactate : zinc lactate
2-MI : 2-methylimidazole
Ti(OBu)$_4$ : tetrabutyl titanate (liquid)
Ti(O-i-Pr)$_4$ : tetraisopropyl orthotitanate (liquid)
Ti(PPD)$_2$ : titanium bis(3-phenoxy-l,2-propane dioxide)

FIG. 5

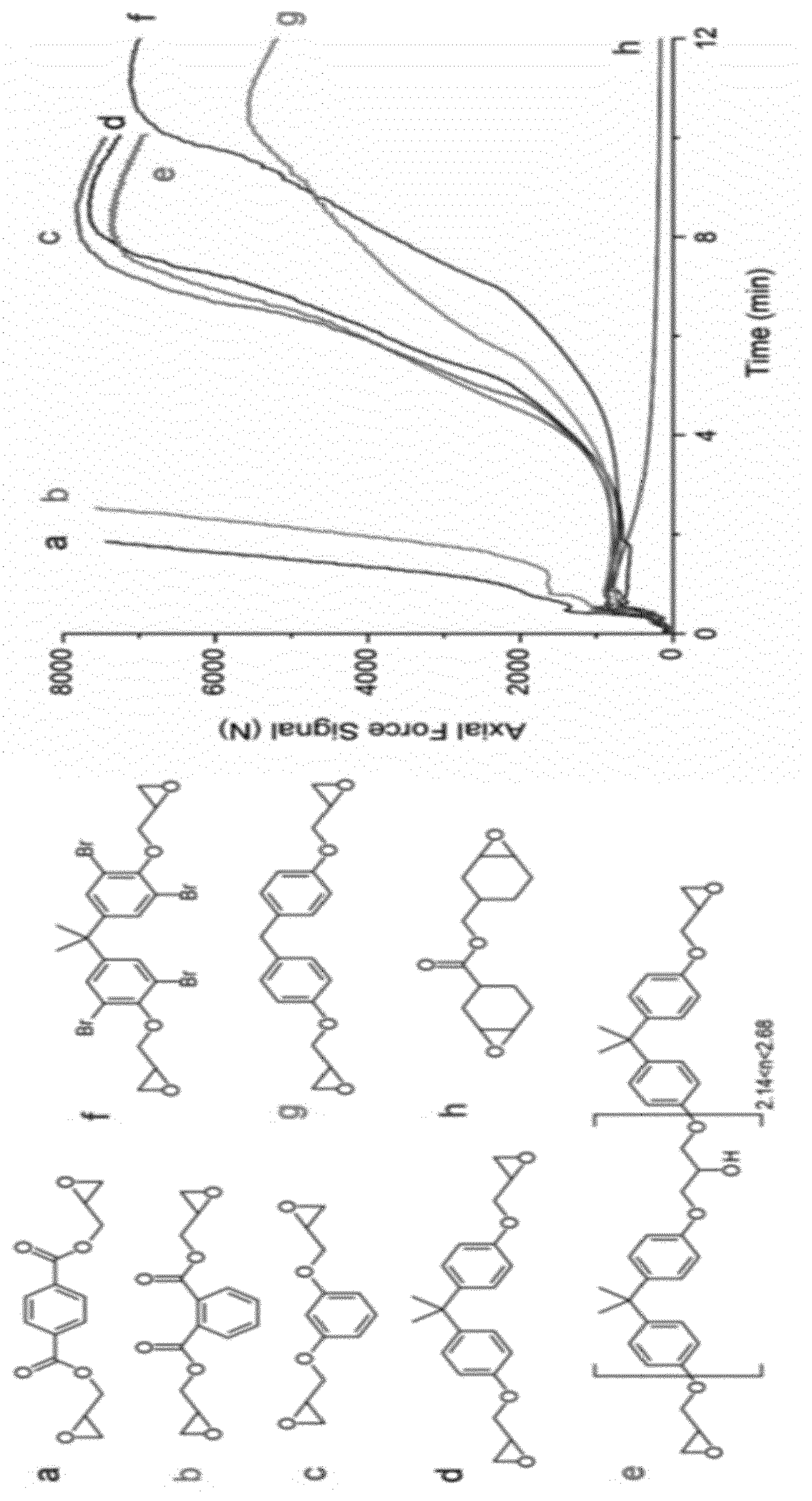
Axial Force Signal (N)
Time (min)
0
2000
4000
6000
8000
0
4
8
12
a
b
c
d
e
f
g
h

FIG. 6

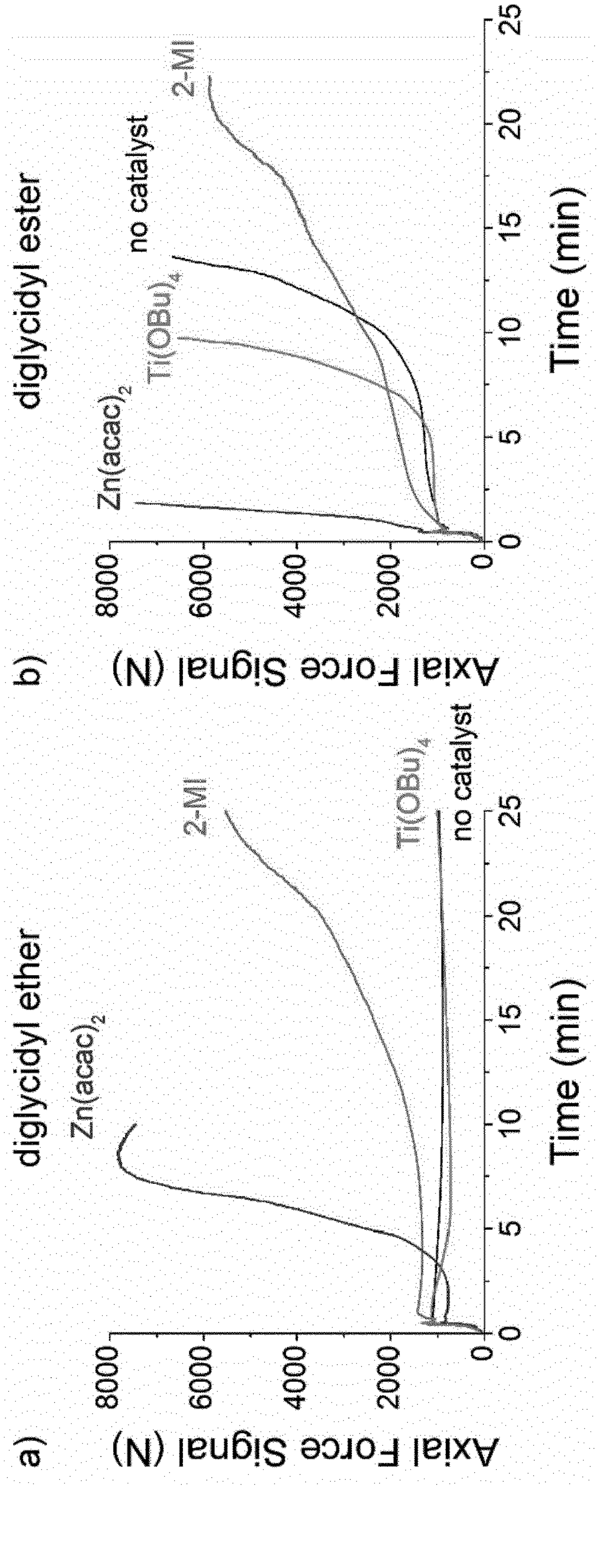
a)
diglycidyl ether
Axial Force Signal (N)
8000
6000
4000
2000
0
Time (min)
0
5
10
15
20
25
Zn(acac)$_2$
2-MI
Ti(OBu)$_4$
no catalyst
b)
diglycidyl ester
Axial Force Signal (N)
8000
6000
4000
2000
0
Time (min)
0
5
10
15
20
25
Zn(acac)$_2$
Ti(OBu)$_4$
no catalyst
2-MI

FIG. 7

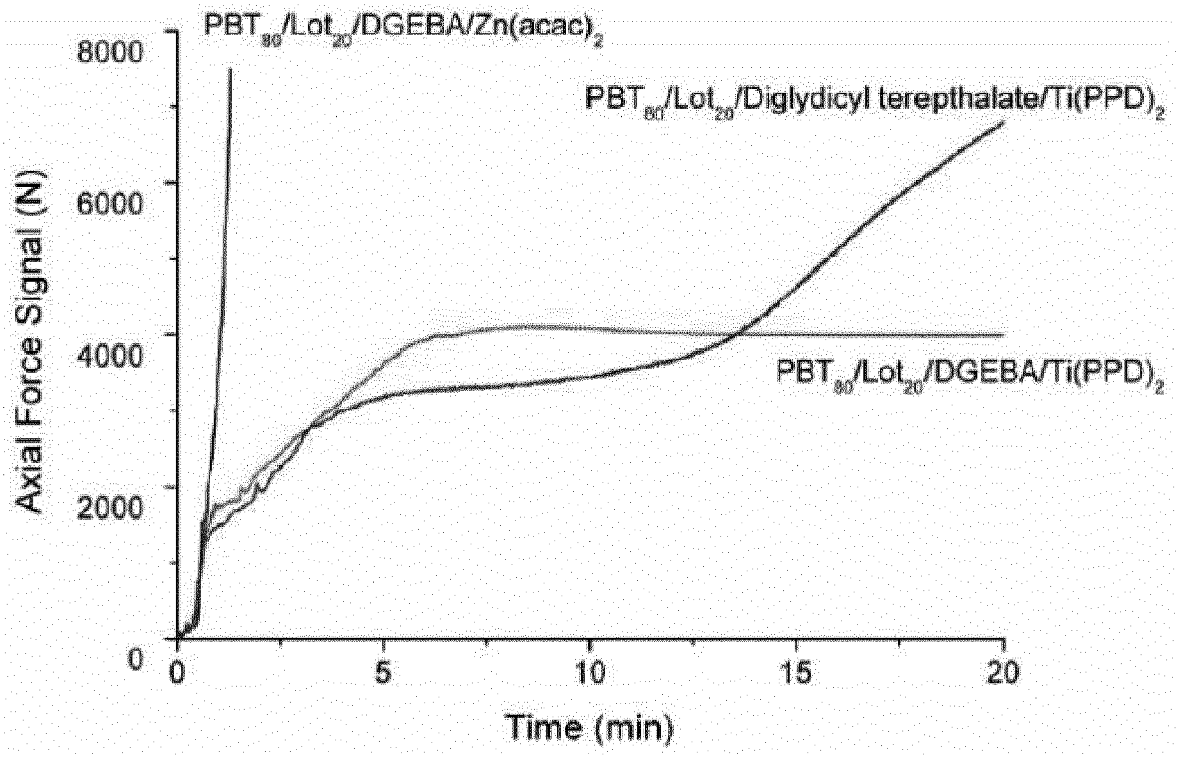
PBT80/Lot20/DGEBA/Zn(acac)2
PBT80/Lot20/Diglydicyl terepthalate/Ti(PPD)2
PBT80/Lot20/DGEBA/Ti(PPD)2
Axial Force Signal (N)
8000
6000
4000
2000
0
0
5
10
15
20
Time (min)

FIG. 8

Europäisches Patentamt
European Patent Office
Office européen des brevets

# EUROPEAN SEARCH REPORT

Application Number
EP 16 30 6675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2016/151551 A1 (SABIC GLOBAL TECHNOLOGIES BV [NL]) 29 September 2016 (2016-09-29) * examples 1-14 * ----- | 1-15 | INV. C08G59/42 |
| Y | Jean-Pierre Pascault ET AL: "General Concepts about Epoxy Polymers" In: "Epoxy Polymers", 1 January 2010 (2010-01-01), Wiley-VCH Verlag GesmbH & Co. KGaA, XP055048902, ISBN: 978-3-52-732480-4 pages 1-12, DOI: 10.1002/9783527628704.ch1, * page 2, lines 2-6; table 1.1 * ----- | 1-15 | |

TECHNICAL FIELDS SEARCHED (IPC)
C08G

The present search report has been drawn up for all claims

1

| Place of search | Date of completion of the search | Examiner |
|---|---|---|
| The Hague | 22 May 2017 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 30 6675

This annex lists the patent family members relating to the patent documents cited in the above-mentioned European search report. The members are as contained in the European Patent Office EDP file on
The European Patent Office is in no way liable for these particulars which are merely given for the purpose of information.

22-05-2017

| Patent document cited in search report | Publication date | Patent family member(s) | Publication date |
|---|---|---|---|
| WO 2016151551 A1 | 29-09-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110319524 A
- WO 2012152859 A
- WO 2014086974 A
- US 62026458 A
- US 62026465 B
- US 62138465 B
- US 62138807 B
- US 62026454 B


### Non-patent literature cited in the description


- **KLOXIN ; BOWMAN.** *Chem. Soc. Rev.,* 2013, vol. 42, 7161-7173
- **D. MONTARNAL et al.** *Science,* 2011, vol. 334, 965-968
- **J.P. BRUTMAN et al.** *ACS Macro Lett.,* 2014, vol. 3, 607-610
- **OTERA.** *J. Chem. Rev.,* 1993, vol. 93, 1449-1470